# EUROPEAN PATENT SPECIFICATION

(11) **EP 2 986 050 B1**
(45) Date of publication and mention of the grant of the patent: **01.11.2017**
(21) Application number: 13883705.9
(22) Date of filing: 03.05.2013
(51) Int. Cl.: H04W 8/02, H04W 28/08

(54) **LOAD BALANCING METHOD AND DEVICE**
LASTENAUSGLEICHSVERFAHREN UND VORRICHTUNG
PROCÉDÉ ET DISPOSITIF D'ÉQUILIBRAGE DE CHARGE

(43) Date of publication of application: 17.02.2016
(73) Proprietor: Huawei Technologies Co., Ltd., Longgang District Shenzhen, Guangdong 518129 (CN)
(72) Inventor: WANG, Chunguang, Shenzhen Guangdong 518129 (CN); YU, Yijun, Shenzhen Guangdong 518129 (CN)
(74) Representative: Epping - Hermann - Fischer
(86) International application number: PCT/CN2013/075107
(87) International publication number: WO 2014/176777

(56) References cited:
- WO-A1-2010/080056
- WO-A1-2013/016842
- CN-A- 1 780 483
- GB-A- 2 490 968
- US-A1- 2010 088 751
- US-A1- 2011 044 245
- US-A1- 2012 039 299
- US-A1- 2013 028 093

## Description

### TECHNICAL FIELD

Embodiments of the present invention relate to communications technologies, and in particular, to a load balancing method and device.

### BACKGROUND

A mobile virtual network operator (Mobile Virtual Network Operator, MVNO) generally refers to an operator that has no operating license of its own or has a restricted development scale, and uses an existing network of an infrastructure operator to develop users and provide services for users. An MVNO shares a network resource with a mobile network operator (Mobile Network Operator, MNO), and allocation and management of a resource are an important part of network sharing. In a case in which a core network is shared, a resource and a device of the core network need to be managed. A mobility management entity (Mobile Management Entity, MME) is a key device on a control plane of an evolved packet core network (Evolution Packet Core-network, EPC), and once an MME device is overloaded, impact of a caused damage is generally large, and it takes a relatively long time for fault recovery. Therefore, load balancing needs to be performed on an MME so that highest utilization is obtained for a device.

An existing mechanism for implementing MME load balancing is setting a weighting factor according to a total capacity of an MME, and an evolved NodeB (evolved NodeB, eNB) implements load balancing among MMEs according to the weighting factor when selecting an MME.

However, when an MVNO and an MNO share an MME, load balancing cannot be implemented only by considering an overall weighting factor of the MME.

GB2490968 (A) discloses a wireless communication system comprising one or more base stations able to divide resources between multiple network operators sharing the base station. A shared base station is configured to monitor a contribution to the load on the base station associated with network operators sharing the base station resources and to provide the determined contribution to the load to one or more other base stations for use in load balancing between the base stations. The invention aims to guarantee fair usage of network resources by each of the network operators according to their share of radio access network (RAN).

WO2010080056 (A1) relates to methods and arrangements in a wireless communication system that enable a load balancing procedure in a network with HeNB GWs. The problem of the ineffective conventional load balancing procedure when used in a network with HeNB GWs, is addressed by a solution where the HeNB includes an explicit indication of the reason for radio link establishment (load balancing establishment cause) in the S1AP INITIAL UE MESSAGE message used to establish the S1 signaling connection associated with a user equipment to an MME, so that the HeNB GW can perform an accurate MME selection based on the knowledge that the establishment is due to load balancing, i.e. an MME selection that realizes the required inter-MME load balancing.

WO2013016842 (A1) discloses a method for moving a wireless terminal in a mobility management serving node pool comprising at least a source mobility management serving node and a target mobility management serving node, comprising: initiating, from the source mobility management serving node, a first subscriber context procedure to inform the target mobility management serving node of a move action for the wireless terminal; launching, from the target mobility management serving node, a second subscriber context procedure to obtain a subscriber context for the wireless terminal from the source mobility management serving node, in response to the informing; and establishing a connection between a radio access node for the wireless terminal and a session management gateway node via the target mobility management serving node. An apparatus and a system are also disclosed for the same. With the solution, control plane and user plane traffic for the wireless terminal may be moved with a minimum of payload loss.

US2012039299 (A1) discloses systems and techniques for avoiding inefficiencies resulting from failed handover attempts. A base station selects one or more mobility management entity (MME) pools for assignment to a relay node, with the selection being performed so as to minimize or eliminate handover attempts requiring that a target device support a particular MME pool when the MME pool is not supported by the MME. A base station selects, when communicating with a relay node, a subset of the MME pools that it supports and assigns the subset to the base station. UEs served by the relay node are assigned the MME pool or MME pools assigned to the relay node. The relay node is informed of the MME pools supported by one or more neighbor nodes and, when attempting a handover to a neighbor node, attempts an X2 handover only to neighbor nodes supporting an MME pool assigned to the relay node.

US2013028093 (A1) discloses a method and an apparatus for load balancing a serving subcell providing a data service to one or more user equipments in a cellular communication system. The method includes calculating a load metric by using a radio resource occupation rate of data traffic in one or more scheduling types except for a Best Effort (BE) scheduling type, determining whether the serving subcell is in an overload state by using the load metric, and triggering a load balancing algorithm when it is determined that the serving subcell is in the overload state. Accordingly, the load metric used for load balancing may be defined to have a value closer to an actual free load, and thus the load balancing may be efficiently performed.

### SUMMARY

In view of this, embodiments of the present invention provide a load balancing method and device as defined in the claims, so as to resolve a problem in the prior art that load balancing cannot be implemented when an MVNO and an MNO share a network resource.

According to a first aspect, a load balancing method is provided, including:
acquiring, by a first device, a load status of an MVNO that shares mobility management network elements; and
performing, by the first device, load balancing among the mobility management network elements according to the load status of the MVNO.

With reference to the first aspect, in a first exemplary implementation for illustrative purposes, the first device is a base station, and the acquiring, by a first device, a load status of an MVNO that shares mobility management network elements includes:
receiving, by the base station, a load weighting factor that is sent by each mobility management network element in a mobility management network element pool, where the load weighting factor includes a load weighting factor that is allocated by the mobility management network element to each MVNO that shares the mobility management network element.

With reference to the first exemplary implementation, in a second possible implementation, the performing, by the first device, load balancing among the mobility management network elements according to the load status of the MVNO includes:
determining, by the base station after receiving an attach request sent by user equipment, an MVNO to which the user equipment belongs;
selecting, by the base station, a mobility management network element for the user equipment according to a load weighting factor that is of the MVNO to which the user equipment belongs and that is on each mobility management network element; and
forwarding, by the base station, the attach request to the selected mobility management network element.

With reference to the first exemplary implementation, in a third possible implementation, the performing, by the first device, load balancing among the mobility management network elements according to the load status of the MVNO includes:
receiving, by the base station, a message that is sent by a first mobility management network element and is used for triggering load reallocation, where the first mobility management network element is an overloaded mobility management network element in the mobility management network element pool, the message for triggering load reallocation is sent by the first mobility management network element when the first mobility management network element is overloaded, and the message for triggering load reallocation includes information about at least one user equipment;
instructing, by the base station according to the message for triggering load reallocation, the at least one user equipment to perform a TAU;
determining, by the base station after receiving an RRC message in a TAU procedure that is sent by the user equipment, an MVNO to which the user equipment belongs;
selecting, by the base station according to a load weighting factor that is of the MVNO to which the user equipment belongs and that is on each mobility management network element, a mobility management network element for the user equipment from mobility management network elements except the first mobility management network element; and
forwarding, by the base station, the RRC message in the TAU procedure to the selected mobility management network element.

With reference to the third possible implementation of the first exemplary implementation, in a fourth possible implementation, the determining an MVNO to which the user equipment belongs includes:
requesting an international mobile subscriber identity IMSI from a mobility management network element according to a temporary identity included in the RRC message, and determining, according to the IMSI, the MVNO to which the user equipment belongs; or
receiving a message that is sent by a mobility management network element and includes information about the MVNO to which the user equipment belongs; or
receiving a message that is sent by the user equipment and includes information about the MVNO to which the user equipment belongs, where the user equipment acquires, from a mobility management network element and in an attach procedure, the information about the MVNO to which the user equipment belongs.

With reference to the first aspect, in a further exemplary implementation for illustrative purposes, the first device is a target mobility management network element during a mobility management network element handover;
the acquiring, by a first device, a load status of an MVNO that shares mobility management network elements includes:
determining, by the target mobility management network element after receiving a handover request sent by a source mobility management network element and according to an MVNO ID included in the handover request, an MVNO to which user equipment initiating a handover belongs, and acquiring the load status of the MVNO to which the user equipment belongs; and
the performing, by the first device, load balancing among the mobility management network elements according to the load status of the MVNO includes:
   determining, by the target mobility management network element according to the load status of the MVNO to which the user equipment belongs, whether to accept the handover request; and
   when it is determined not to accept the handover request, sending, by the target mobility management network element, a handover response indicating rejection to the source mobility management network element, so that the source mobility management network element sends a handover request to another target mobility management network element according to the handover response indicating rejection.

With reference to the first aspect, in another exemplary implementation for illustrative purposes, the first device is a source mobility management network element during a mobility management network element handover;
the acquiring, by a first device, a load status of an MVNO that shares mobility management network elements includes:
sending, by the source mobility management network element, a query request to a DNS after receiving a handover request sent by a base station, where the query request includes a TAI, and receiving a query response sent by the DNS, where the query response includes information about a target mobility management network element, and the target mobility management network element is determined by the DNS according to the TAI; and
sending, by the source mobility management network element, an MVNO load status request to each target mobility management network element according to the information about the target mobility management network element, and receiving an MVNO load status response sent by the target mobility management network element, where the MVNO load status response includes the load status of an MVNO to which user equipment initiating a handover belongs; and
the performing, by the first device, load balancing among the mobility management network elements according to the load status of the MVNO includes:
   determining, by the source mobility management network element according to the load status that is of the MVNO to which the user equipment belongs and that is on each target mobility management network element, a target mobility management network element that can accept the handover request; and
   forwarding, by the source mobility management network element, the handover request to the target mobility management network element that can accept the handover request.

With reference to the first aspect, in yet another exemplary implementation for illustrative purposes, the first device is a DNS;
the acquiring, by a first device, a load status of an MVNO that shares mobility management network elements includes:
querying, by the DNS after receiving a query request sent by a source mobility management network element, for a target mobility management network element according to a TAI included in the query request; and
receiving, by the DNS, MVNO load status information reported by the target mobility management network element obtained by means of query; and
the performing, by the first device, load balancing among the mobility management network elements according to the load status of the MVNO includes:
   selecting, by the DNS, a target mobility management network element according to the MVNO load status information; and
   sending, by the DNS, a query response to the source mobility management network element, where the query response includes information about the selected target mobility management network element, so that the source mobility management network element forwards a handover request to the selected target mobility management network element.

With reference to the first aspect, according to the invention, the first device is a load management module;
the acquiring, by a first device, a load status of an MVNO that shares mobility management network elements includes:
configuring, by the load management module, a load quota of the MVNO for each mobility management network element in a mobility management network element pool, where a sum of load quotas of each MVNO on all mobility management network elements is a total amount of resources that can be allocated by the load management module to a corresponding MVNO; and
the performing, by the first device, load balancing among the mobility management network elements according to the load status of the MVNO includes:
   dynamically adjusting, by the load management module, load quotas of the MVNO among the mobility management network elements. In addition, the dynamically adjusting, by the load management module, load quotas of the MVNO among the mobility management network elements includes:
      receiving, by the load management module, an overload event sent by a first mobility management network element, where the overload event is sent when a difference between a current load quantity of a first MVNO of the first mobility management network element and a load quota that is allocated by the load management module to the first MVNO of the first mobility management network element is less than a set value, and the overload event includes a load quota that the first mobility management network element requests to be added;
      querying, by the load management module, for a current load quantity of the first MVNO on another mobility management network element; and
      determining, by the load management module, a second mobility management network element according to the current load quantity on the another mobility management network element, and scheduling a load quota of the second mobility management network element to the first mobility management network element.

With reference to an exemplary implementation manner for illustrative purposes, the scheduling a load quota of the second mobility management network element to the first mobility management network element includes:
sending, by the load management module, a load reduction scheduling message to the second mobility management network element, where the load reduction scheduling message enables the second mobility management network element to reduce the load quota of the second mobility management network element, and the load quota subtracted is the same as the load quota that is requested to be added; and
sending, by the load management module, a load scheduling message to the first mobility management network element, where the load increase scheduling message enables the first mobility management module to increase the load quota of the first mobility management module by the load quota that is requested to be added.

According to a second aspect, a load balancing device is provided, including:
an acquiring module, configured to acquire a load status of a mobile virtual network operator MVNO that shares mobility management network elements; and
a balancing module, configured to perform load balancing among the mobility management network elements according to the load status of the MVNO that is acquired by the acquiring module.

With reference to the second aspect, in a first exemplary implementation for illustrative purposes, the acquiring module is specifically configured to:
receive a load weighting factor that is sent by each mobility management network element in a mobility management network element pool, where the load weighting factor includes a load weighting factor that is allocated by the mobility management network element to each MVNO that shares the mobility management network element.

With reference to the first exemplary, in a second possible implementation, the balancing module is specifically configured to:
determine, after receiving an attach request sent by user equipment, an MVNO to which the user equipment belongs;
select a mobility management network element for the user equipment according to a load weighting factor that is of the MVNO to which the user equipment belongs and that is on each mobility management network element; and
forward the attach request to the selected mobility management network element.

With reference to the first exemplary implementation, in a third possible implementation, the balancing module is specifically configured to:
receive a message that is sent by a first mobility management network element and is used for triggering load reallocation, where the first mobility management network element is an overloaded mobility management network element in the mobility management network element pool, the message for triggering load reallocation is sent by the first mobility management network element when the first mobility management network element is overloaded, and the message for triggering load reallocation includes information about at least one user equipment;
instruct, according to the message for triggering load reallocation, the at least one user equipment to perform a tracking area update TAU;
determine, after receiving an RRC message in a TAU procedure that is sent by the user equipment, an MVNO to which the user equipment belongs;
select, according to a load weighting factor that is of the MVNO to which the user equipment belongs and that is on each mobility management network element, a mobility management network element for the user equipment from mobility management network elements except the first mobility management network element; and
forward the RRC message in the TAU procedure to the selected mobility management network element.

With reference to the third possible implementation, in a fourth possible implementation manner, the determining, by the balancing module, an MVNO to which the user equipment belongs includes:
requesting an international mobile subscriber identity IMSI from a mobility management network element according to a temporary identity included in the RRC message, and determining, according to the IMSI, the MVNO to which the user equipment belongs; or
receiving a message that is sent by a mobility management network element and includes information about the MVNO to which the user equipment belongs; or
receiving a message that is sent by the user equipment and includes information about the MVNO to which the user equipment belongs, where the user equipment acquires, from a mobility management network element and in an attach procedure, the information about the MVNO to which the user equipment belongs.

With reference to the second aspect, in a further exemplary implementation for illustrative purposes, the device is a target mobility management network element during a mobility management network element handover;
the acquiring module is specifically configured to: determine, after receiving a handover request sent by a source mobility management network element and according to a mobile virtual network operator identity MVNO ID included in the handover request, an MVNO to which user equipment initiating a handover belongs, and acquire the load status of the MVNO to which the user equipment belongs; and
the balancing module is specifically configured to: determine, according to the load status of the MVNO to which the user equipment belongs, whether to accept the handover request; and when it is determined not to accept the handover request, send a handover response indicating rejection to the source mobility management network element, so that the source mobility management network element sends a handover request to another target mobility management network element according to the handover response indicating rejection.

With reference to the second aspect, in another exemplary implementation for illustrative purposes, the device is a source mobility management network element during a mobility management network element handover;
the acquiring module is specifically configured to: send a query request to a domain name system DNS after receiving a handover request sent by a base station, where the query request includes a tracking area identity TAI, and receive a query response sent by the DNS, where the query response includes information about a target mobility management network element, and the target mobility management network element is determined by the DNS according to the TAI; and send an MVNO load status request to each target mobility management network element according to the information about the target mobility management network element, and receive an MVNO load status response sent by the target mobility management network element, where the MVNO load status response includes the load status of an MVNO to which user equipment initiating a handover belongs; and
the balancing module is specifically configured to: determine, according to the load status that is of the MVNO to which the user equipment belongs and that is on each target mobility management network element, a target mobility management network element that can accept the handover request; and forward the handover request to the target mobility management network element that can accept the handover request.

With reference to the second aspect, in yet another exemplary implementation for illustrative purposes, the device is a DNS;
the acquiring module is specifically configured to: query, after receiving a query request sent by a source mobility management network element, for a target mobility management network element according to a TAI included in the query request; and receive MVNO load status information reported by the target mobility management network element obtained by means of query; and
the balancing module is specifically configured to: select a target mobility management network element according to the MVNO load status information; and send a query response to the source mobility management network element, where the query response includes information about the selected target mobility management network element, so that the source mobility management network element forwards a handover request to the selected target mobility management network element.

With reference to the second aspect, according to the invention, the device is a load management module;
the acquiring module is specifically configured to: configure a load quota of the MVNO for each mobility management network element in a mobility management network element pool, where a sum of load quotas of each MVNO on all mobility management network elements is a total amount of resources that can be allocated by the load management module to a corresponding MVNO; and
the balancing module is specifically configured to: dynamically adjust load quotas of the MVNO among the mobility management network elements. In addition, the balancing module is specifically configured to:
receive an overload event sent by a first mobility management network element, where the overload event is sent when a difference between a current load quantity of a first MVNO of the first mobility management network element and a load quota that is allocated by the load management module to the first MVNO of the first mobility management network element is less than a set value, and the overload event includes a load quota that the first mobility management network element requests to be added;
query for a current load quantity of the first MVNO on another mobility management network element; and
determine a second mobility management network element according to the current load quantity on the another mobility management network element, and schedule a load quota of the second mobility management network element to the first mobility management network element.

With reference to an exemplary implementation the scheduling, by the balancing module, a load quota of the second mobility management network element to the first mobility management network element includes:
sending a load reduction scheduling message to the second mobility management network element, where the load reduction scheduling message enables the second mobility management network element to reduce the load quota of the second mobility management network element, and the load quota subtracted is the same as the load quota that is requested to be added; and
sending a load scheduling message to the first mobility management network element, where the load increase scheduling message enables the first mobility management module to increase the load quota of the first mobility management module by the load quota that is requested to be added.

According to a third illustrative example a load balancing device is provided, including:
a processor, configured to acquire a load status of a mobile virtual network operator MVNO that shares mobility management network elements; and perform load balancing among the mobility management network elements according to the acquired load status of the MVNO.

With reference to the third illustrative example in a first possible implementation, the device is a base station, and the device further includes:
a receiver, configured to receive a load weighting factor that is sent by each mobility management network element in a mobility management network element pool, where the load weighting factor includes a load weighting factor that is allocated by the mobility management network element to each MVNO that shares the mobility management network element.

With reference to the first possible implementation, in a second possible implementation, the processor is specifically configured to:
determine, after the receiver receives an attach request sent by user equipment, an MVNO to which the user equipment belongs; and select a mobility management network element for the user equipment according to a load weighting factor that is of the MVNO to which the user equipment belongs and that is on each mobility management network element; and
the device further includes a sender, configured to forward the attach request to the mobility management network element selected by the processor.

With reference to the first possible implementation, in a third possible implementation, the device further includes:
the receiver, configured to receive a message that is sent by a first mobility management network element and is used for triggering load reallocation, where the first mobility management network element is an overloaded mobility management network element in the mobility management network element pool, the message for triggering load reallocation is sent by the first mobility management network element when the first mobility management network element is overloaded, and the message for triggering load reallocation includes information about at least one user equipment;
the processor is specifically configured to: instruct, according to the message for triggering load reallocation, the at least one user equipment to perform a tracking area update TAU;
the receiver is further configured to: receive an RRC message in a TAU procedure that is sent by the user equipment;
the processor is further configured to: determine, after the receiver receives a TAU request sent by the user equipment, an MVNO to which the user equipment belongs; and select, according to a load weighting factor that is of the MVNO to which the user equipment belongs and that is on each mobility management network element, a mobility management network element for the user equipment from mobility management network elements except the first mobility management network element; and
the device further includes a sender, configured to forward the RRC message in the TAU procedure to the mobility management network element selected by the processor.

With reference to the third possible implementation, in a fourth possible implementation, the determining, by the processor, an MVNO to which the user equipment belongs includes:
requesting an international mobile subscriber identity IMSI from a mobility management network element according to a temporary identity included in the RRC message, and determining, according to the IMSI, the MVNO to which the user equipment belongs; or
receiving a message that is sent by a mobility management network element and includes information about the MVNO to which the user equipment belongs; or
receiving a message that is sent by the user equipment and includes information about the MVNO to which the user equipment belongs, where the user equipment acquires, from a mobility management network element and in an attach procedure, the information about the MVNO to which the user equipment belongs.

With reference to the third illustrative example, in a fifth possible implementation, the device is a target mobility management network element during a mobility management network element handover;
the device further includes a receiver, configured to receive a handover request sent by a source mobility management network element;
the processor is specifically configured to: determine, according to a mobile virtual network operator identity MVNO ID included in the handover request received by the receiver, an MVNO to which user equipment initiating a handover belongs, and acquire the load status of the MVNO to which the user equipment belongs; and determine, according to the load status of the MVNO to which the user equipment belongs, whether to accept the handover request; and
the device further includes a sender, configured to: when the processor determines not to accept the handover request, send a handover response indicating rejection to the source mobility management network element, so that the source mobility management network element sends a handover request to another target mobility management network element according to the handover response indicating rejection.

With reference to the third illustrative example, in a sixth possible implementation, the device is a source mobility management network element during a mobility management network element handover;
the device further includes a receiver, configured to receive a handover request sent by a base station;
the device further includes a sender, configured to send a query request to a domain name system DNS after the receiver receives the handover request, where the query request includes a tracking area identity TAI;
the receiver is further configured to: receive a query response sent by the DNS, where the query response includes information about a target mobility management network element, and the target mobility management network element is determined by the DNS according to the TAI;
the sender is further configured to: send an MVNO load status request to each target mobility management network element according to the information about the target mobility management network element that is received by the receiver;
the receiver is further configured to: receive an MVNO load status response sent by the target mobility management network element, where the MVNO load status response includes the load status of an MVNO to which user equipment initiating a handover belongs;
the processor is specifically configured to: determine, according to a load status that is received by the receiver and that is of the MVNO to which the user equipment belongs on each target mobility management network element, a target mobility management network element that can accept the handover request; and
the sender is further configured to: forward the handover request to the target mobility management network element that is determined by the processor and can accept the handover request.

With reference to the third illustrative example, in a seventh possible implementation, the device is a DNS;
the device further includes a receiver, configured to receive a query request sent by a source mobility management network element;
the processor is specifically configured to: query for a target mobility management network element according to a TAI included in the query request received by the receiver;
the receiver is further configured to: receive MVNO load status information reported by the target mobility management network element obtained by means of query;
the processor is further configured to: select a target mobility management network element according to the MVNO load status information received by the receiver; and
the device further includes a sender, configured to send a query response to the source mobility management network element, where the query response includes information about the target mobility management network element selected by the processor, so that the source mobility management network element forwards a handover request to the selected target mobility management network element.

With reference to the third illustrative example, in an eighth possible implementation, the device is a load management module;
the processor is specifically configured to: configure a load quota of the MVNO for each mobility management network element in a mobility management network element pool, where a sum of load quotas of each MVNO on all mobility management network elements is a total amount of resources that can be allocated by the load management module to a corresponding MVNO; and dynamically adjust load quotas of the MVNO among the mobility management network elements.

With reference to the eighth possible implementation, in a ninth possible implementation, the device further includes a receiver, configured to receive an overload event sent by a first mobility management network element, where the overload event is sent when a difference between a current load quantity of a first MVNO of the first mobility management network element and a load quota that is allocated by the load management module to the first MVNO of the first mobility management network element is less than a set value, and the overload event includes a load quota that the first mobility management network element requests to be added; and
the dynamically adjusting, by the processor, load quotas of the MVNO among the mobility management network elements includes: querying for a current load quantity of the first MVNO on another mobility management network element; and determining a second mobility management network element according to the current load quantity on the another mobility management network element, and scheduling a load quota of the second mobility management network element to the first mobility management network element.

With reference to the ninth possible implementation, in a tenth possible implementation, the device further includes:
a sender, configured to send a load reduction scheduling message to the second mobility management network element, where the load reduction scheduling message enables the second mobility management network element to reduce the load quota of the second mobility management network element, and the load quota subtracted is the same as the load quota that is requested to be added; and send a load scheduling message to the first mobility management network element, where the load increase scheduling message enables the first mobility management module to increase the load quota of the first mobility management module by the load quota that is requested to be added, so that the load quota of the second mobility management network element is scheduled to the first mobility management network element.

By using the foregoing technical solutions, of the present invention, during load balancing, according to a load status of an MVNO that shares mobility management network elements, a status of the MVNO may be considered instead of considering only a status of an MME, which may implement load balancing when the MVNO and an MNO share a network resource.

### BRIEF DESCRIPTION OF DRAWINGS

To describe the technical solutions of the present invention more clearly, the following briefly introduces the accompanying drawings. Apparently, the accompanying drawings in the following description show some illustrative examples, followed by the solutions of the present invention.
FIG. 1 is a schematic flowchart of an exemplary load balancing method;
FIG. 2 is a schematic flowchart of another exemplary load balancing method;
FIG. 3 is a schematic flowchart of another exemplary load balancing method;
FIG. 4 is a schematic flowchart of another exemplary load balancing method;
FIG. 5 is a schematic flowchart of another exemplary load balancing method;
FIG. 6 is a schematic flowchart of another exemplary load balancing method;
FIG. 7 is a schematic flowchart of a load balancing method according to the present invention;
FIG. 8 is a schematic structural diagram of a load balancing device according to the present invention; and
FIG. 9 is a schematic structural diagram of another load balancing device according to an illustrative example.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. It should be understood that, the technical solutions of the embodiments of the present invention may be applied to various communications systems, such as: a Global System of Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division-Duplex, "TDD" for short), a Universal Mobile Telecommunications System (Universal Mobile Telecommunication System, "UMTS" for short), a Worldwide Interoperability for Microwave Access (Worldwide Interoperability for Microwave Access, "WiMAX" for short) communications system.

It should also be understood that in the embodiments of the present invention, user equipment (User Equipment, "UE" for short) may be referred to as a terminal (Terminal), a mobile station (Mobile Station, "MS" for short), a mobile terminal (Mobile Terminal), and the like. The user equipment may communicate with one or more core networks through a radio access network (Radio Access Network, "RAN" for short). For example, the user equipment may be a mobile phone (also referred to as a "cellular" phone) or a computer with a mobile terminal. For example, the user equipment may also be a portable, pocket-sized, handheld, computer built-in, or in-vehicle mobile apparatus, which exchanges voice and/or data with the radio access network.

It should also be understood that a base station in the embodiments of the present invention may be a base transceiver station (Base Transceiver Station, "BTS" for short) in GSM or CDMA, may be a NodeB (NodeB, "NB" for short) in WCDMA, or may be an evolved NodeB (evolved NodeB, "eNB" or "e-NodeB" for short) in LTE.

It should also be understood that a mobility management network element in the embodiments of the present invention may be a mobility management entity (Mobility Management Entity, MME), or may be a serving GPRS support node (Serving GPRS Support Node, SGSN) in a general packet radio service (General Packet Radio Service, GPRS) system.

In a scenario in which an MVNO and an MNO share MMEs, the MNO limits a resource used by the MVNO. Therefore, it is not only required to consider a total capacity of the MMEs, but it is also required to consider a resource occupation status of the MVNO for load balancing among the MMEs, so as to implement load balancing among the MMEs and a flexible configuration of resources, which ensures access of an MVNO user and service use, and also avoids excessively occupying MNO resources by an MVNO, thereby improving resource utilization.

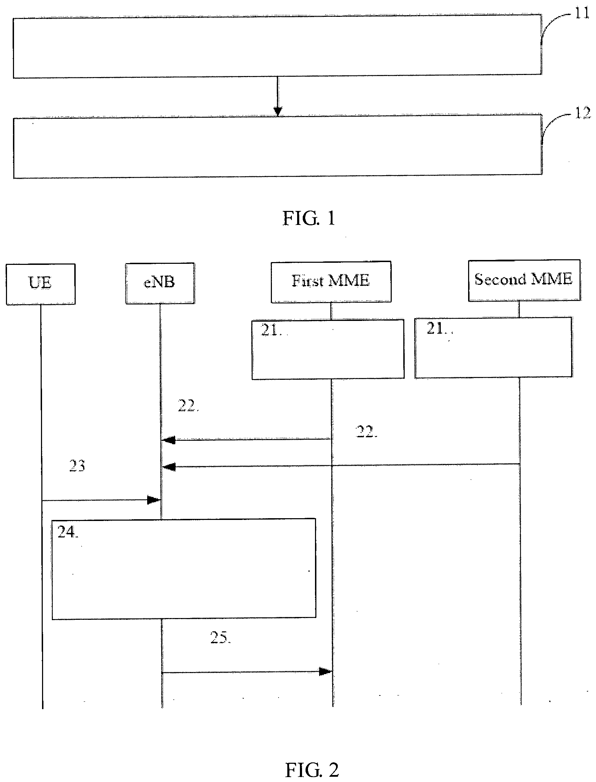

FIG. 1 is a schematic flowchart of an exemplary load balancing method, where the method includes:
11. A first device acquires a load status of an MVNO that shares mobility management network elements.
12. The first device performs load balancing among the mobility management network elements according to the load status of the MVNO.

Optionally, the first device may be a base station, and the base station may implement load balancing when user equipment is to attach to a mobility management network element, or the base station may perform load reallocation when an MVNO on a mobility management network element is overloaded.

In this case, the acquiring, by a first device, a load status of an MVNO that shares mobility management network elements includes:
receiving, by the base station, a load weighting factor that is sent by each mobility management network element in a mobility management network element pool, where the load weighting factor includes a load weighting factor that is allocated by the mobility management network element to each MVNO that shares the mobility management network element.

Optionally, during load balancing, the performing, by the first device, load balancing among the mobility management network elements according to the load status of the MVNO includes:
determining, by the base station after receiving an attach request sent by user equipment, an MVNO to which the user equipment belongs;
selecting, by the base station, a mobility management network element for the user equipment according to a load weighting factor that is of the MVNO to which the user equipment belongs and that is on each mobility management network element; and
forwarding, by the base station, the attach request to the selected mobility management network element.

Optionally, during load reallocation, the performing, by the first device, load balancing among the mobility management network elements according to the load status of the MVNO includes:
receiving, by the base station, a message that is sent by a first mobility management network element and is used for triggering load reallocation, where the first mobility management network element is an overloaded mobility management network element in the mobility management network element pool, the message for triggering load reallocation is sent by the first mobility management network element when the first mobility management network element is overloaded, and the message for triggering load reallocation includes information about at least one user equipment;
instructing, by the base station according to the message for triggering load reallocation, the at least one user equipment to perform a tracking area update (Tracking Area Update, TAU);
determining, by the base station after receiving an RRC message in a TAU procedure that is sent by the user equipment, an MVNO to which the user equipment belongs;
selecting, by the base station according to a load weighting factor that is of the MVNO to which the user equipment belongs and that is on each mobility management network element, a mobility management network element for the user equipment from mobility management network elements except the first mobility management network element; and
forwarding, by the base station, the RRC message in the TAU procedure to the selected mobility management network element.

Optionally, the first device may be a device during a mobility management network element handover, for example, a source mobility management network element, a target mobility management network element, or a domain name system (Domain Name System, DNS).

Optionally, the first device is a target mobility management network element during a mobility management network element handover;
the acquiring, by a first device, a load status of an MVNO that shares mobility management network elements includes:
determining, by the target mobility management network element after receiving a handover request sent by a source mobility management network element and according to an MVNO ID included in the handover request, an MVNO to which user equipment initiating a handover belongs, and acquiring the load status of the MVNO to which the user equipment belongs; and
the performing, by the first device, load balancing among the mobility management network elements according to the load status of the MVNO includes:
   determining, by the target mobility management network element according to the load status of the MVNO to which the user equipment belongs, whether to accept the handover request; and
   when it is determined not to accept the handover request, sending, by the target mobility management network element, a handover response indicating rejection to the source mobility management network element, so that the source mobility management network element sends a handover request to another target mobility management network element according to the handover response indicating rejection.

Optionally, the first device is a source mobility management network element during a mobility management network element handover;
the acquiring, by a first device, a load status of an MVNO that shares mobility management network elements includes:
sending, by the source mobility management network element, a query request to a DNS after receiving a handover request sent by a base station, where the query request includes a tracking area identity (Tracking Area Identity, TAI), and receiving a query response sent by the DNS, where the query response includes information about a target mobility management network element, and the target mobility management network element is determined by the DNS according to the TAI; and
sending, by the source mobility management network element, an MVNO load status request to each target mobility management network element according to the information about the target mobility management network element, and receiving an MVNO load status response sent by the target mobility management network element, where the MVNO load status response includes the load status of an MVNO to which user equipment initiating a handover belongs; and
the performing, by the first device, load balancing among the mobility management network elements according to the load status of the MVNO includes:
   determining, by the source mobility management network element according to the load status that is of the MVNO to which the user equipment belongs and that is on each target mobility management network element, a target mobility management network element that can accept the handover request; and
   forwarding, by the source mobility management network element, the handover request to the target mobility management network element that can accept the handover request.

Optionally, the first device is a DNS;
the acquiring, by a first device, a load status of an MVNO that shares mobility management network elements includes:
querying, by the DNS after receiving a query request sent by a source mobility management network element, for a target mobility management network element according to a TAI included in the query request; and
receiving, by the DNS, MVNO load status information reported by the target mobility management network element obtained by means of query; and
the performing, by the first device, load balancing among the mobility management network elements according to the load status of the MVNO includes:
   selecting, by the DNS, a target mobility management network element according to the MVNO load status information; and
   sending, by the DNS, a query response to the source mobility management network element, where the query response includes information about the selected target mobility management network element, so that the source mobility management network element forwards a handover request to the selected target mobility management network element. According to the invention, the first device is a load management module that dynamically allocates a load quota among mobility management network elements. In this case, the first device is a load management module;
the acquiring, by a first device, a load status of an MVNO that shares mobility management network elements includes:
   configuring, by the load management module, a load quota of the MVNO for each mobility management network element in a mobility management network element pool, where a sum of load quotas of each MVNO on all mobility management network elements is a total amount of resources that can be allocated by the load management module to a corresponding MVNO; and
   the performing, by the first device, load balancing among the mobility management network elements according to the load status of the MVNO includes:
      dynamically adjusting, by the load management module, load quotas of the MVNO among the mobility management network elements. In addition, the dynamically adjusting, by the load management module, load quotas of the MVNO among the mobility management network elements includes:
         receiving, by the load management module, an overload event sent by a first mobility management network element, where the overload event is sent when a difference between a current load quantity of a first MVNO of the first mobility management network element and a load quota that is allocated by the load management module to the first MVNO of the first mobility management network element is less than a set value, and the overload event includes a load quota that the first mobility management network element requests to be added;
      querying, by the load management module, for a current load quantity of the first MVNO on another mobility management network element; and
      determining, by the load management module, a second mobility management network element according to the current load quantity on the another mobility management network element, and scheduling a load quota of the second mobility management network element to the first mobility management network element.

Optionally, the scheduling a load quota of the second mobility management network element to the first mobility management network element may include in an illustrative example:
sending, by the load management module, a load reduction scheduling message to the second mobility management network element, so that the second mobility management network element reduces the load quota of the second mobility management network element, and the load quota subtracted is the same as the load quota that is requested to be added; and
sending, by the load management module, a load scheduling message to the first mobility management network element, where the load increase scheduling message enables the first mobility management module to increase the load quota of the first mobility management module by the load quota that is requested to be added.

In this embodiment, during load balancing, according to a load status of an MVNO that shares mobility management network elements, a status of the MVNO may be considered instead of considering only a status of an MME, which may implement load balancing when the MVNO and an MNO share a network resource.

The following provides specific illustrative implementations for the foregoing scenarios by using an example in which user equipment, a base station, and a mobility management network element are respectively UE, an eNB, and an MME.

FIG. 2 is a schematic flowchart of another exemplary load balancing method. An example in which an eNB implements MME load balancing when UE attaches is used. In this example, that a quantity of MMEs in a mobility management network element pool is two is used as an example. It may be understood that when the quantity of MMEs in the pool is at least three, this embodiment may also be executed with reference to the following. This example includes:
21. A first MME and a second MME separately allocate a load weighting factor to each of their MVNOs.

For example, MVNOs that share the first MME include a first MVNO and a second MVNO; then, the first MME may allocate 0.8 as a load weighting factor of the first MVNO and 0.2 as a load weighting factor of the second MVNO.

For another example, MVNOs that share the second MME include a first MVNO, a second MVNO, and a third MVNO; then, the second MME may allocate 0.6 as a load weighting factor of the first MVNO, 0.3 as a load weighting factor of the second MVNO, and 0.1 as a load weighting factor of the third MVNO.

Load weighting factors of MVNOs on each MME may form a load weight list, which is used to record the load weighting factors of the MVNOs on the MME.

Each MME may pre-allocate the load weighting factors according to a stipulation with the MVNOs. A load weighting factor may indicate a capability of an MVNO for bearing a load; for example, a larger load weighting factor may indicate that a corresponding MVNO can bear more loads.
22. The first MME and the second MME separately send the load weighting factor of each of their MVNOs to an eNB.

The load weighting factors of the MVNOs may be sent to the eNB by using an S1 interface message, for example, an S1 setup message.
23. The eNB receives an attach request sent by UE.
24. The eNB determines an MVNO to which the UE belongs, and selects an MME according to a load weighting factor of the MVNO on each MME.

For example, the attach request may include a UE identity, for example, an international mobile subscriber identity (International Mobile Subscriber Identity, IMSI). A correspondence between a UE identity and an MVNO may be preconfigured in the eNB; for example, the MVNO to which UE belongs is determined according to a public land mobile network identity (Public Land Mobile Network Identity, PLMN ID) (that is, a mobile country code MCC and a mobile network code MNC) in the UE identity; or the MVNO to which UE belongs is distinguished according to a number segment range of the IMSI, that is, the UE belongs to the first MVNO when a UE IMSI number segment is in a first range, belongs to the second MVNO when the UEIMSI number segment is in a second range, or the like. The eNB may determine, according to the UE identity included in the attach request and the correspondence between a UE identity and an MVNO, the MVNO to which the UE belongs.

After the MVNO to which the UE belongs is determined, the eNB may query for the load weighting factor of the MVNO on each MME, and select an MME on which a load weighting factor is larger. For example, when the MVNO to which the UE belongs is the first MVNO, the load weighting factor of the first MVNO on the first MME is 0.8, and the load weighting factor of the second MVNO on the second MME is 0.6; then, the first MME is selected.
25. The eNB forwards the attach request to the selected MME so that the UE attaches to the selected MME.

For example, when the first MME is selected, the eNB sends the attach request to the first MME, so that the UE attaches to the first MME.

In this example, MMEs send load weighting factors of MVNOs maintained by the MMEs to an eNB, so that the eNB may implement load balancing among the MMEs according to the load weighting factors of the MVNOs.

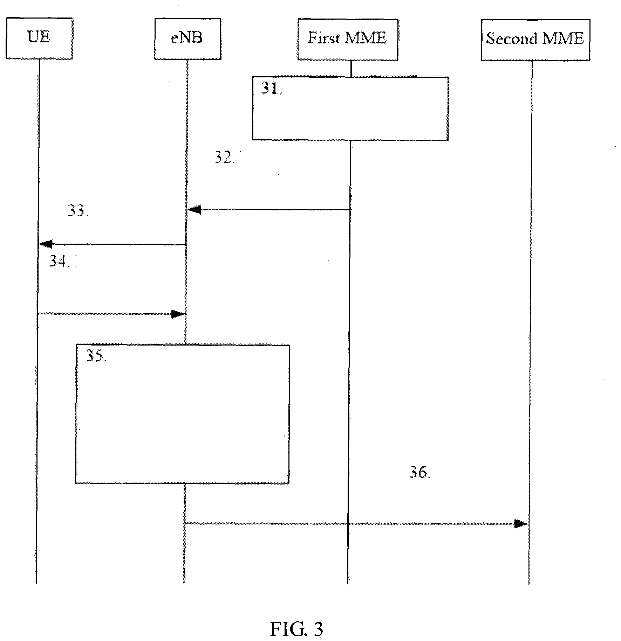

FIG. 3 is a schematic flowchart of another exemplary load balancing method. An example in which an eNB implements load reallocation is used. This example includes:
31. A first MME determines that a first MVNO that shares the first MME is overloaded.

Each MME may learn the load status of each MVNO that shares the MME; for example, the load status is 80% or 10%, where the load status refers to a ratio of a current load quantity to a total amount of loads that can be carried.

When the load status of an MVNO on an MME is 100% or reaches a set ratio, for example, 90%, it may be determined that the MVNO is overloaded. The overloaded MME and MVNO are the foregoing first MME and the foregoing first MVNO.

32. The first MME sends a message for triggering load reallocation to an eNB.

When the first MME determines that the first MVNO is overloaded, load reallocation may be triggered. That is, at least some UEs that originally attach to the first MME need to be migrated to another MME.

In this case, the first MME may randomly select a set quantity of UEs belonging to the first MVNO, or select a set quantity of UEs belonging to the first MVNO according to a set rule.

The message for triggering load reallocation may include information about the selected UE, and the message for triggering load reallocation may be an S1 release message, and a reason value may indicate that a tracking area update needs to be performed for load balancing.

33. The eNB sends an instruction message to selected UE, where the instruction message is used to instruct the UE to initiate a TAU procedure.

Then, the eNB may release an S1 interface connection, and a radio resource control (Radio Resource Control, RRC) connection with the UE.

34. The eNB receives an RRC message in the TAU procedure that is sent by the UE.

The RRC message in the TAU procedure does not include identity information of a previous MME, that is, a globally unique MME identity (GUMMEI, Globally Unique Temporary UE Identity). In this case, the eNB does not preferentially select the previous MME.

35. The eNB determines an MVNO to which the UE belongs, and selects an MME from MMEs except the first MME according to a load weighting factor of the MVNO on each MME.

In this step, the eNB needs to determine the MVNO to which the UE belongs; because a UE identity transferred in the RRC message is a temporary identity instead of an IMSI, a method for distinguishing the MVNO to which the UE belongs includes:
the eNB requests an IMSI from an MME according to the temporary identity, and the eNB determines, according to the IMSI, the MVNO to which the UE belongs; or
the MME transfers information about the MVNO to which the UE belongs to the eNB, so that the eNB learns the MVNO to which the UE belongs; or
in an attach procedure, the MME sends information about the MVNO to which the UE belongs to the UE, and in the TAU procedure, the UE adds a message of the MVNO to which the UE belongs to an RRC Connection Request message.

A load weighting factor of each MVNO on each MME may be the same as that in the foregoing embodiment.

In addition, because a TAU request does not include identity information of the first MME, it can be ensured that the eNB does not preferentially select the first MME; further, because the TAU procedure is initiated by the first MME, it can also be ensured that the eNB no longer preferentially selects the first MME. 36. The eNB forwards a TAU request to the selected MME so that the UE attaches to the selected MME.

For example, the selected MME is a second MME; then, the TAU request is sent to the second MME.

In this example, an eNB maintains load weighting factors of MVNOs on MMEs, so that the eNB may implement load balancing again among the MMEs during load reallocation according to the load weighting factors of the MVNOs.

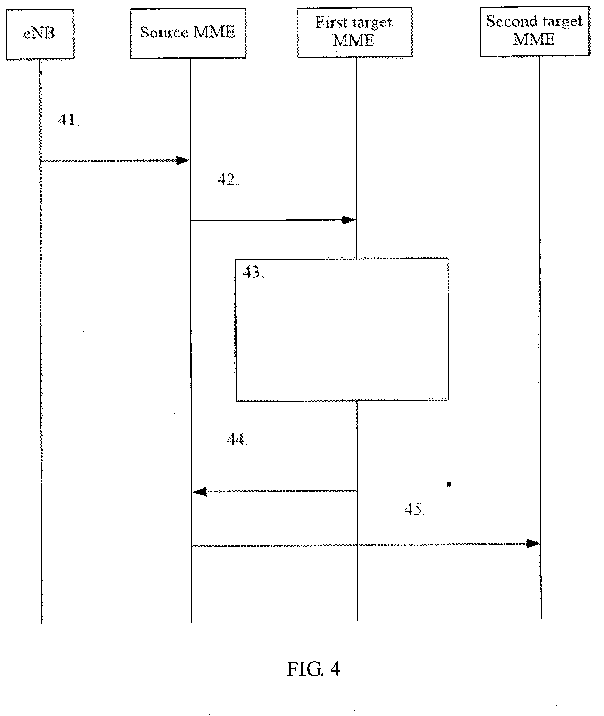

FIG. 4 is a schematic flowchart of exemplary load balancing method. An MME handover scenario is used as an example, and a target MME performs handover selection. This example includes:
41. An eNB sends a handover request to a source MME, where the handover request includes a UE identity.
42. The source MME sends a handover request to a first target MME, where the handover request includes an MVNO ID.

A correspondence between a UE identity and an MVNO ID may be preconfigured in the source MME, so that the MVNO ID may be determined according to the UE identity.

The first target MME may be an MME that is randomly selected by the source MME from an MME pool, except the source MME.

43. The first target MME determines, according to the MVNO ID, an MVNO to which UE belongs, and determines, according to the load status of the MVNO, whether to accept the handover request.

Each MME may learn the load status of each MVNO of the MME, for example, the foregoing 10% or 80%.

A threshold may be preset for each MME, and when the load status does not exceed the threshold, for example, does not exceed 90%, after the handover request is accepted, it is determined to accept the handover request; otherwise, the handover request is not accepted.

After it is determined to accept the handover request, the UE may be handed over to the first target MME, and the first target MME continues to process a service of the UE.

44. After it is determined not to accept the handover request, the first target MME sends a handover response indicating rejection to the source MME.

45. After receiving the handover response indicating rejection, the source MME sends a handover request to a second target MME.

The second target MME may be any MME that is randomly selected by the source MME from the MME pool, except the source MME and the first target MME.

The handover request may also carry an MVNO ID, and the second target MME may execute, after receiving the handover request, a procedure the same as that executed by the first target MME, which is not described herein again.

In this example, a target MME may determine, according to the load status of the target MME, whether to accept a handover request, and after the handover request is rejected, instruct a source MME to attempt on another target MME, which implements load balancing during a handover.

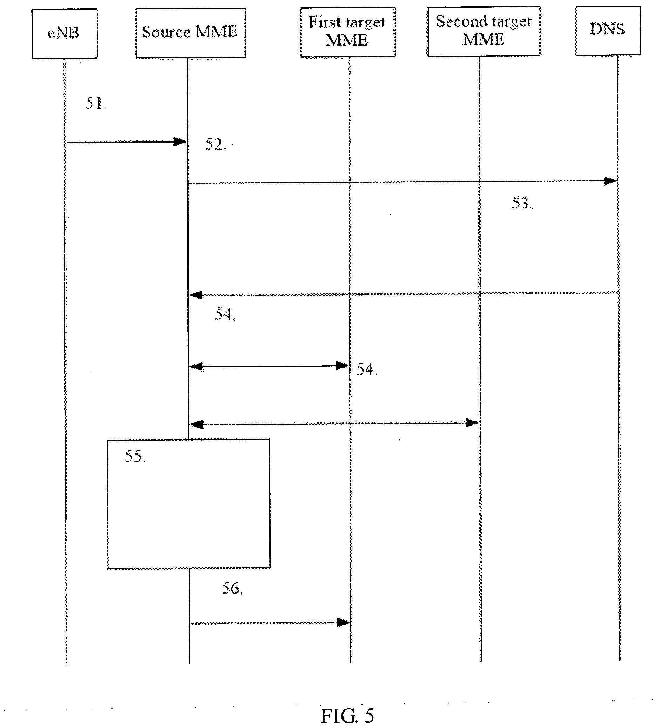

FIG. 5 is a schematic flowchart of another exemplary load balancing method. An MME handover scenario is used as an example, and a source MME performs handover selection. This example includes:
51. An eNB sends a handover request to a source MME, where the handover request includes a UE identity and a target TAI (Tracking Area Identity).
52. The source MME sends a query request to a DNS, where the query request includes the target TAI obtained in step 51.
53. The DNS obtains, by means of query, a target MME according to the target TAI, and adds information about the target MME to a query response and sends a query response to the source MME.

A TAI identifies a service area, and a connected MME may be specified for each service area; therefore, the DNS may obtain, by means of query, the target MME according to the target TAI.

When a quantity of target MMEs obtained by means of query by the DNS is at least two, these target MMEs may form a list, and correspondingly, the query response includes information about the list.

54. The source MME sends an MVNO load status request to each target MME according to the information about the target MME, and receives a corresponding MVNO load status response.

For example, the information about the target MME that is returned by the DNS includes information about a first target MME and information about a second target MME; then, the source MME sends an MVNO load status request to the first target MME and receives a corresponding response; and sends an MVNO load status request to the second target MME and receives a corresponding response.

The MVNO load status request is used to acquire the load status of an MVNO on a corresponding target MME, and the load status of the MVNO includes the load status of an MVNO to which UE belongs.

Specifically, each target MME sends load status of MVNOs of the target MME to the source MME, and the source MME load statusobtains, from these load statuss by means of query, the load status of an MVNO to which UE belongs, and the MVNO to which the UE belongs may be determined according to an MVNO ID; or
the source MME adds an MVNO ID to the MVNO load status request to be sent, so that each target MME returns only the load status of an MVNO corresponding to the MVNO ID.

55. The source MME selects a target MME according to the load status that is of an MVNO to which UE belongs and that is on each target MME.

For example, a load status that is returned by the first target MME and is of the MVNO to which the UE belongs is 30%, and a load status that is returned by the first target MME and is of the MVNO to which the UE belongs is 50%; then, the source MME may use the first target MME that has a lighter load, that is, has a smaller load status, as the selected target MME.

56. The source MME sends a handover request to the selected target MME.

For example, the handover request is sent to the first target MME, where the handover request may include an MVNO ID.

In this example, a source MME acquires a load status of each target MME and may select a suitable target MME to receive a handover request, which implements load balancing during a handover.

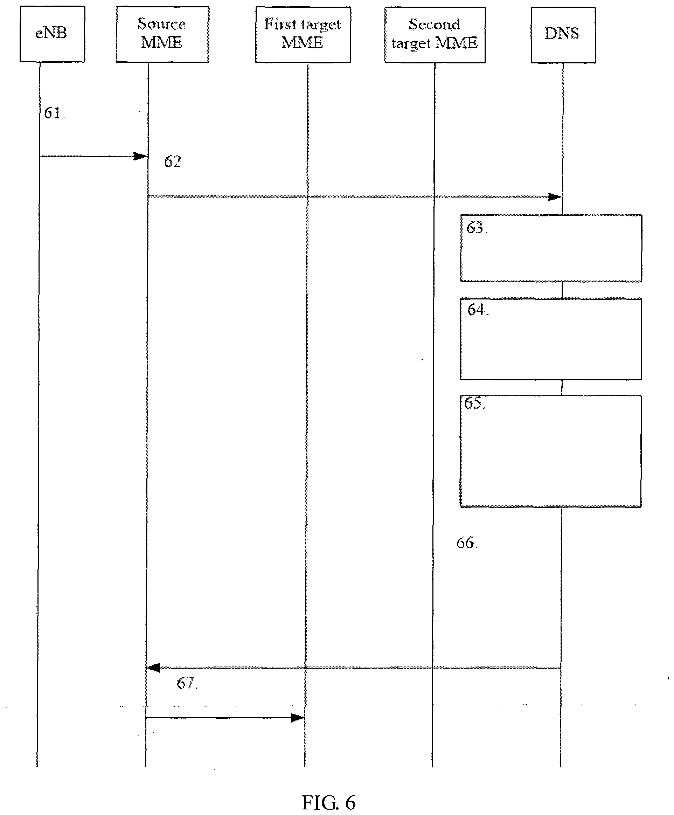

FIG. 6 is a schematic flowchart of another exemplary load balancing method according to an embodiment of the present invention. An MME handover scenario is used, and a DNS performs handover selection. This example includes:
61. An eNB sends a handover request to a source MME, where the handover request includes a UE identity and a target TAI.
62. The source MME sends a query request to a DNS, where the query request includes information about the target TAI acquired in step 61. The query request further includes identity information of an MVNO to which UE belongs.
63. The DNS obtains, by means of query, a target MME according to the TAI.
64. The DNS acquires a load status of each target MME that is obtained by means of query, where the load status includes a load status of an MVNO to which UE initiating a handover belongs.

Each MME may send load status information of the MME to the DNS, and after obtaining, by means of query, the target MME, the DNS may acquire, from the load status information reported by each MME, a load status of each target MME that is obtained by means of query; or,
after obtaining, by means of query, the target MME, the DNS may send an MVNO load status request to each target MME that is obtained by means of query and receive a response, so as to obtain a load status of each target MME.

In addition, when the DNS queries each target MME, each target MME may return load statuss of all MVNOs, and then the DNS obtains, from the load statuss of all MVNOs by means of query, a load status of the MVNO to which the UE belongs; or the DNS adds, when querying each target MME, information about the MVNO to which the UE belongs, so that each target MME returns only a load status of the MVNO to which the UE belongs.

65. The DNS selects a target MME according to a load status that is of an MVNO to which the UE belongs and that is on each target MME.

For example, the MVNO to which the UE belongs is a first MVNO, a load status of the first MVNO on a first target MME is 30%, and a load status of the first MVNO on a second target MME is 50%; then, the first target MME may be used as the selected target MME.

66. The DNS sends a query response to the source MME, where the query response includes information about the selected target MME.

For example, the query response includes information about the first target MME.

67. The source MME sends a handover request to the selected target MME.

For example, the handover request is sent to the first target MME, where the handover request may include an MVNO ID.

In this example, a DNS acquires a load status of each target MME, and may select a suitable target MME and send information about the selected target MME to a source MME, so that the source MME forwards a handover request to the target MME selected by the DNS, which implements load balancing during a handover.

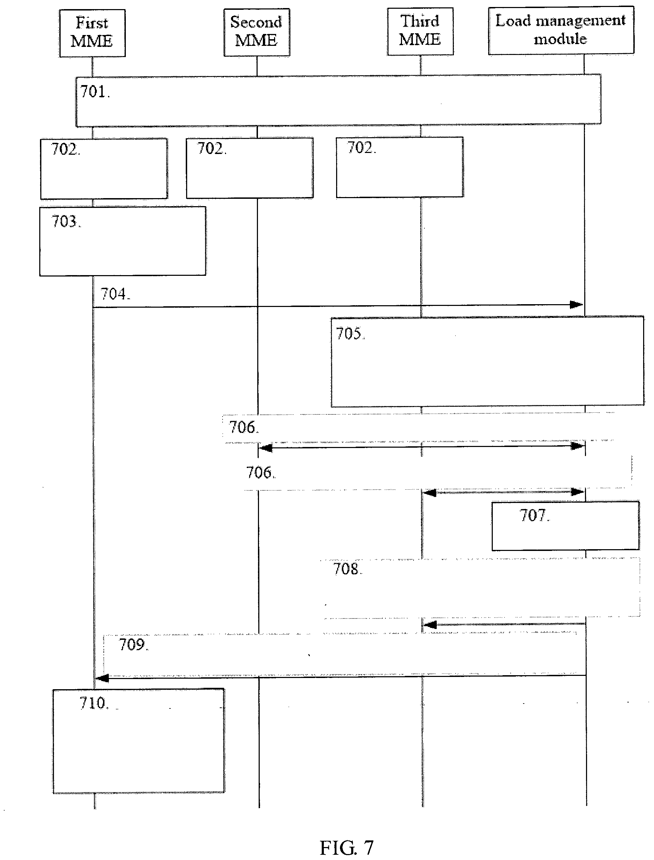

FIG. 7 is a schematic flowchart of a load balancing method according to the present invention. A load quota of an MVNO is dynamically configured among MMEs. In this embodiment, that a quantity of MMEs in a mobility management network element pool is three is used as an example. It may be understood that when the quantity of MMEs in the pool is another number, this embodiment may also be executed with reference to the following. Allocation of a first MVNO is used as an example in this embodiment; allocation to another MVNO may also be executed with reference to the following. This embodiment includes:
701. A load management module configures a corresponding load quota for each MME according to a total amount of loads of a first MVNO that can be allocated.

A sum of load quotas allocated to all MMEs is the total amount of loads.

For example, a load quota of the first MVNO that is allocated to a first MME is a first load quota, a load quota of the first MVNO that is allocated to a second MME is a second load quota, and a load quota of the first MVNO that is allocated to a third MME is a third load quota; then: the first load quota + the second load quota + the third load quota = the total amount of loads of the first MVNO.

A total amount of loads of an MVNO may be stipulated in advance. A load quota allocated to each MME may be randomly configured or be determined according to a preset calculation method, where it is ensured that a sum of load quotas of MMEs is the same as the total amount of loads.

The load quota allocated to each MME may refer to a maximum quantity of UEs that may be carried by the MME.

702. Each MME monitors a load usage status of the MME.

703. A load usage status of an MME approaches a configured load quota.

For example, when a difference between a load usage status of the first MME and the first load quota is less than or equal to a set value, it indicates that the load usage status of the first MME approaches the configured load quota.

704. A first MME reports an overload event to the load management module.

The overload event includes a current load usage status of the first MME and a quota requested to be added, where the current load usage status may refer to a quantity of loads that are currently being processed.

705. The load management module determines whether a sum of a current load usage status of the first MME and a quota requested to be added is greater than a first load quota.

When the sum of the current load usage status of the first MME and the quota requested to be added is not greater than the first load quota, processing may still be performed according to an existing quota.

When the sum of the current load usage status of the first MME and the quota requested to be added is greater than the first load quota, another MME may be scheduled. A scheduling procedure may include:
706. The load management module sends an MVNO load usage status query request to another MME and receives a corresponding response, where the response includes a load usage status of a corresponding MME.

For example, the load management module queries for load usage statuses of the second MME and the third MME.

707. The load management module selects a scheduled MME according to the load usage status of the another MME.

The load usage status may be a quantity of current loads. For example, a load usage status returned by the second MME is a second quantity, a load usage status returned by the third MME is a third quantity, and the load management module may determine an MME that has a smaller quantity as the scheduled MME. For example, when the third quantity is less than the second quantity, the third MME may be selected as the scheduled MME; or
the load usage status may also be a ratio of a quantity of current loads to a corresponding load quota. For example, a load usage status returned by the second MME is a second quantity divided by a second load quota, a load usage status returned by the third MME is a third quantity divided by a third load quota, and the load management module may determine an MME that has a smaller ratio as the scheduled MME. For example, when the third quantity divided by the third load quota is less than the second quantity divided by the second load quota, the third MME may be selected as the scheduled MME.

708. The load management module may send a first instruction message to the selected scheduled MME, where the first instruction message is used to instruct the scheduled MME to reduce a load quota.

The first instruction message may include a load quota to be subtracted, so that the scheduled MME subtracts the load quota. For example, a load quota included in the first instruction message is X; then, a reduced load quota of the third MME = the third load quota - X; or
the first instruction message may include a reduced load quota. For example, a load quota included in the first instruction message is (the third load quota - X), so that: the reduced load quota of the third MME = the third load quota - X.

In addition, the load quota subtracted, that is, X, is the load quota that the first MME requests to be added.

709. The load management module may send a second instruction message to the first MME, where the second instruction message is used to instruct the first MME to increase a load quota.

The second instruction message may not include quota information; after receiving the second instruction message, the first MME may determine a quota that the first MME requests to be added and that is agreed by the load management module, and then, the first MME increases the load quota of the first MME by the quota that the first MME requests to be added; or,
the second instruction message may include information about a quota that is requested to be added; after receiving the second instruction message, the first MME adds the quota information. For example, the second instruction message includes X; then: an increased load quota of the first MME = the first load quota + X; or,
the second instruction message may include information about an increased quota; after receiving the second instruction message, the first MME adjusts the load quota to the increased quota information. For example, the second instruction message includes (the first load quota + X); then: the increased load quota of the first MME = the first load quota + X.

710. Each MME maintains a load usage status of the first MVNO according to a new load quota.

That is, the foregoing steps 702 to 709 may be repeatedly executed.

In this embodiment, dynamic scheduling is used, which may implement dynamic use of resources among MMEs in a case in which a total load quota of loads of an MVNO on the MMEs does not increase, so as to more flexibly configure a resource for the MVNO for use, ensuring access of an MVNO user and service use, improving resource utilization, and reducing investment costs.

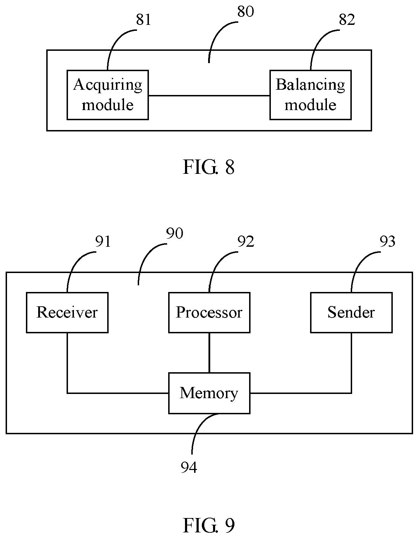

FIG. 8 is a schematic structural diagram of a load balancing device. The device 80 includes an acquiring module 81 and a balancing module 82. The acquiring module 81 is configured to acquire a load status of an MVNO that shares mobility management network elements; and the balancing module 82 is configured to perform load balancing among the mobility management network elements according to the load status of the MVNO that is acquired by the acquiring module 81.

Optionally, the device 80 is a base station, and the acquiring module 81 is specifically configured to: receive a load weighting factor that is sent by each mobility management network element in a mobility management network element pool, where the load weighting factor includes a load weighting factor that is allocated by the mobility management network element to each MVNO that shares the mobility management network element.

Optionally, when the device 80 is a base station, the balancing module 82 is specifically configured to: determine, after receiving an attach request sent by user equipment, an MVNO to which the user equipment belongs; select a mobility management network element for the user equipment according to a load weighting factor that is of the MVNO to which the user equipment belongs and that is on each mobility management network element; and forward the attach request to the selected mobility management network element.

Optionally, when the device 80 is a base station, the balancing module 82 is specifically configured to: receive a message that is sent by a first mobility management network element and is used for triggering load reallocation, where the first mobility management network element is an overloaded mobility management network element in the mobility management network element pool, the message for triggering load reallocation is sent by the first mobility management network element when the first mobility management network element is overloaded, and the message for triggering load reallocation includes information about at least one user equipment; instruct, according to the message for triggering load reallocation, the at least one user equipment to perform a TAU; determine, after receiving an RRC message in a TAU procedure that is sent by the user equipment, an MVNO to which the user equipment belongs; select, according to a load weighting factor that is of the MVNO to which the user equipment belongs and that is on each mobility management network element, a mobility management network element for the user equipment from mobility management network elements except the first mobility management network element; and forward the RRC message in the TAU procedure to the selected mobility management network element.

Optionally, the determining, by the balancing module, an MVNO to which the user equipment belongs includes:
requesting an international mobile subscriber identity IMSI from a mobility management network element according to a temporary identity included in the RRC message, and determining, according to the IMSI, the MVNO to which the user equipment belongs; or
receiving a message that is sent by a mobility management network element and includes information about the MVNO to which the user equipment belongs; or
receiving a message that is sent by the user equipment and includes information about the MVNO to which the user equipment belongs, where the user equipment acquires, from a mobility management network element and in an attach procedure, the information about the MVNO to which the user equipment belongs.

Optionally, the device 80 is a target mobility management network element during a mobility management network element handover; the acquiring module 81 is specifically configured to: determine, after receiving a handover request sent by a source mobility management network element and according to an MVNO ID included in the handover request, an MVNO to which user equipment initiating a handover belongs, and acquire a load status of the MVNO to which the user equipment belongs; and the balancing module 82 is specifically configured to: determine, according to the load status of the MVNO to which the user equipment belongs, whether to accept the handover request; and when it is determined not to accept the handover request, send a handover response indicating rejection to the source mobility management network element, so that the source mobility management network element sends a handover request to another target mobility management network element according to the handover response indicating rejection.

Optionally, the device 80 is a source mobility management network element during a mobility management network element handover; the acquiring module 81 is specifically configured to: send a query request to a DNS after receiving a handover request sent by a base station, where the query request includes a TAI, and receive a query response sent by the DNS, where the query response includes information about a target mobility management network element, and the target mobility management network element is determined by the DNS according to the TAI; and send an MVNO load status request to each target mobility management network element according to the information about the target mobility management network element, and receive an MVNO load status response sent by the target mobility management network element, where the MVNO load status response includes a load status of an MVNO to which user equipment initiating a handover belongs; and the balancing module 82 is specifically configured to: determine, according to a load status that is of the MVNO to which the user equipment belongs and that is on each target mobility management network element, a target mobility management network element that can accept the handover request; and forward the handover request to the target mobility management network element that can accept the handover request.

Optionally, the device 80 is a DNS; the acquiring module 81 is specifically configured to: query, after receiving a query request sent by a source mobility management network element, for a target mobility management network element according to a TAI included in the query request; and receive MVNO load status information reported by the target mobility management network element obtained by means of query; and the balancing module 82 is specifically configured to: select a target mobility management network element according to the MVNO load status information; and send a query response to the source mobility management network element, where the query response includes information about the selected target mobility management network element, so that the source mobility management network element forwards a handover request to the selected target mobility management network element. According to the invention, the device 80 is a load management module; the acquiring module 81 is specifically configured to: configure a load quota of an MVNO for each mobility management network element in a mobility management network element pool, where a sum of load quotas of each MVNO on all mobility management network elements is a total amount of resources that can be allocated by the load management module to a corresponding MVNO; and the balancing module 82 is specifically configured to dynamically adjust the load quotas of the MVNO among the mobility management network elements. In addition, the balancing module 82 is specifically configured to: receive an overload event sent by a first mobility management network element, where the overload event is sent when a difference between a current load quantity of a first MVNO of the first mobility management network element and a load quota that is allocated by the load management module to the first MVNO of the first mobility management network element is less than a set value, and the overload event includes a load quota that the first mobility management network element requests to be added; query for a current load quantity of the first MVNO on another mobility management network element; and determine a second mobility management network element according to the current load quantity on the another mobility management network element, and schedule a load quota of the second mobility management network element to the first mobility management network element.

Optionally, the scheduling, by the balancing module 82, a load quota of the second mobility management network element to the first mobility management network element may include in an illustrative example:
sending, by the load management module, a load reduction scheduling message to the second mobility management network element, where the load reduction scheduling message enables the second mobility management network element to reduce the load quota of the second mobility management network element, and the load quota subtracted is the same as the load quota that is requested to be added; and
sending, by the load management module, a load scheduling message to the first mobility management network element, where the load increase scheduling message enables the first mobility management module to increase the load quota of the first mobility management module by the load quota that is requested to be added.

Referring to FIG. 9, a further illustrative example provides another load balancing device. The device 90 includes a receiver 91, a processor 92 connected to the receiver 91, a sender 93 connected to the processor 92, and a memory 94 connected to the receiver 91, the processor 92, and the sender 93. The processor 92 is configured to acquire a load status of an MVNO that shares mobility management network elements, and perform load balancing among the mobility management network elements according to the load status of the MVNO.

Optionally, the device 90 is a base station, and the receiver 91 is configured to receive a load weighting factor that is sent by each mobility management network element in a mobility management network element pool, where the load weighting factor includes a load weighting factor that is allocated by the mobility management network element to each MVNO that shares the mobility management network element.

Optionally, when the device 90 is a base station, the receiver 91 is further configured to receive an attach request sent by user equipment; the processor is specifically configured to: determine, after the receiver 91 receives the attach request sent by the user equipment, an MVNO to which the user equipment belongs; and select a mobility management network element for the user equipment according to a load weighting factor that is of the MVNO to which the user equipment belongs and that is on each mobility management network element; and the sender 93 is configured to forward the attach request to the selected mobility management network element.

Optionally, when the device 90 is a base station, the receiver 91 is further configured to: receive a message that is sent by a first mobility management network element and is used for triggering load reallocation, where the first mobility management network element is an overloaded mobility management network element in the mobility management network element pool, the message for triggering load reallocation is sent by the first mobility management network element when the first mobility management network element is overloaded, and the message for triggering load reallocation includes information about at least one user equipment; the processor 92 is specifically configured to instruct, according to the message for triggering load reallocation, the at least one user equipment to perform a TAU; the receiver 91 is further configured to receive an RRC message in a TAU procedure that is sent by the user equipment; the processor 92 is further configured to: determine, after the receiver 91 receives the RRC message in the TAU procedure that is sent by the user equipment, an MVNO to which the user equipment belongs; and select, according to a load weighting factor that is of the MVNO to which the user equipment belongs and that is on each mobility management network element, a mobility management network element for the user equipment from mobility management network elements except the first mobility management network element; and the sender 93 is configured to forward the RRC message in the TAU procedure to the selected mobility management network element.

Optionally, the determining, by the processor, an MVNO to which the user equipment belongs includes:
requesting an international mobile subscriber identity IMSI from a mobility management network element according to a temporary identity included in the RRC message, and determining, according to the IMSI, the MVNO to which the user equipment belongs; or
receiving a message that is sent by a mobility management network element and includes information about the MVNO to which the user equipment belongs; or
receiving a message that is sent by the user equipment and includes information about the MVNO to which the user equipment belongs, where the user equipment acquires, from a mobility management network element and in an attach procedure, the information about the MVNO to which the user equipment belongs.

Optionally, the device 90 is a target mobility management network element during a mobility management network element handover; the receiver 91 is configured to receive a handover request sent by a source mobility management network element; and the processor 92 is specifically configured to: determine, after the receiver 91 receives a handover request sent by a source mobility management network element and according to an MVNO ID included in the handover request, an MVNO to which user equipment initiating a handover belongs, and acquire a load status of the MVNO to which the user equipment belongs; and determine, according to the load status of the MVNO to which the user equipment belongs, whether to accept the handover request; and the sender 93 is configured to: when the processor 92 determines not to accept the handover request, send a handover response indicating rejection to the source mobility management network element, so that the source mobility management network element sends a handover request to another target mobility management network element according to the handover response indicating rejection.

Optionally, the device 90 is a source mobility management network element during a mobility management network element handover; the receiver 91 is configured to receive a handover request sent by a base station; the sender 93 is specifically configured to send a query request to a DNS after the receiver 91 receives the handover request sent by the base station, where the query request includes a TAI; the receiver 91 is further configured to receive a query response sent by the DNS, where the query response includes information about a target mobility management network element, and the target mobility management network element is determined by the DNS according to the TAI; the sender 93 is further configured to send an MVNO load status request to each target mobility management network element according to the information about the target mobility management network element that is received by the receiver 91; the receiver 91 is further configured to receive an MVNO load status response sent by the target mobility management network element, where the MVNO load status response includes a load status of the MVNO to which user equipment initiating a handover belongs; the processor 92 is specifically configured to determine, according to a load status that is received by the receiver 91 and that is of the MVNO to which the user equipment belongs on each target mobility management network element, a target mobility management network element that can accept the handover request; and the sender 93 is further configured to forward the handover request to the target mobility management network element that is determined by the processor and can accept the handover request.

Optionally, the device 90 is a DNS; the receiver 91 is configured to receive a query request sent by a source mobility management network element; the processor 92 is specifically configured to query, after the receiver 91 receives the query request sent by the source mobility management network element, for a target mobility management network element according to a TAI included in the query request; the receiver 91 is further configured to receive MVNO load status information reported by the target mobility management network element obtained by means of query; the processor 92 is further configured to select a target mobility management network element according to the MVNO load status information; and the sender 93 is configured to send a query response to the source mobility management network element, where the query response includes information about the target mobility management network element selected by the processor 92, so that the source mobility management network element forwards a handover request to the selected target mobility management network element.

Optionally, the device 90 is a load management module; and the processor 92 is specifically configured to: configure a load quota of an MVNO for each mobility management network element in a mobility management network element pool, where a sum of load quotas of each MVNO on all mobility management network elements is a total amount of resources that can be allocated by the load management module to a corresponding MVNO; and dynamically adjust the load quotas of the MVNO among the mobility management network elements.

Optionally, the receiver 91 is configured to receive an overload event sent by a first mobility management network element, where the overload event is sent when a difference between a current load quantity of a first MVNO of the first mobility management network element and a load quota that is allocated by the load management module to the first MVNO of the first mobility management network element is less than a set value, and the overload event includes a load quota that the first mobility management network element requests to be added; the processor 92 is specifically configured to: query for a current load quantity of the first MVNO on another mobility management network element; and determine a second mobility management network element according to the current load quantity on the another mobility management network element, and schedule a load quota of the second mobility management network element to the first mobility management network element.

Optionally, the sender 93 is configured to send a load reduction scheduling message to the second mobility management network element, where the load reduction scheduling message enables the second mobility management network element to reduce the load quota of the second mobility management network element, and the load quota subtracted is the same as the load quota that is requested to be added; and send a load scheduling message to the first mobility management network element, where the load increase scheduling message enables the first mobility management module to increase the load quota of the first mobility management module by the load quota that is requested to be added.

In specific implementation, the foregoing receiver and sender may be combined as a transceiver, and the foregoing processor may be a CPU, a DSP, an FPGA, or the like. The foregoing memory is configured to store related information and data, and may be a flash, a DDR, or the like.

In this embodiment, during load balancing, according to a load status of an MVNO that shares mobility management network elements, a status of the MVNO may be considered instead of considering only a status of an MME, which may implement load balancing when the MVNO and an MNO share a network resource.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts shown as units may or may not be physical units, that is, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such understanding, the technical solutions of the present application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A load balancing method for a scenario in which a mobile virtual network operator MVNO and an mobile network operator MNO share mobility management network elements, comprising:
acquiring(11), by a first device, a load status of a mobile virtual network operator MVNO that shares mobility management network elements; and
performing(12), by the first device, load balancing among the mobility management network elements according to the load status of the MVNO,
wherein:
the first device is a load management module;
the acquiring, by a first device, a load status of an MVNO that shares mobility management network elements comprises:
configuring, by the load management module, a load quota of the MVNO for each mobility management network element in a mobility management network element pool, wherein a sum of load quotas of each MVNO on all mobility management network elements is a total amount of resources that can be allocated by the load management module to a corresponding MVNO; and
the performing, by the first device, load balancing among the mobility management network elements according to the load status of the MVNO comprises:
dynamically adjusting, by the load management module, load quotas of the MVNO among the mobility management network elements, comprising
receiving, by the load management module, an overload event sent by a first mobility management network element, wherein the overload event is sent when a difference between a current load quantity of a first MVNO of the first mobility management network element and a load quota that is allocated by the load management module to the first MVNO of the first mobility management network element is less than a set value, and the overload event comprises a load quota that the first mobility management network element requests to be added;
querying, by the load management module, for a current load quantity of the first MVNO on another mobility management network element; and
determining, by the load management module, a second mobility management network element according to the current load quantity on the another mobility management network element, and scheduling a load quota of the second mobility management network element to the first mobility management network element.

2. A load balancing device(80) for a scenario in which a mobile virtual network operator MVNO and an mobile network operator MNO share mobility management network elements, comprising:
an acquiring module(81), configured to acquire a load status of a mobile virtual network operator MVNO that shares mobility management network elements; and
a balancing module(82), configured to perform load balancing among the mobility management network elements according to the load status of the MVNO that is acquired by the acquiring module(81),
wherein:
the device is a load management module;
the acquiring module is specifically configured to: configure a load quota of the MVNO for each mobility management network element in a mobility management network element pool, wherein a sum of load quotas of each MVNO on all mobility management network elements is a total amount of resources that can be allocated by the load management module to a corresponding MVNO; and
the balancing module is specifically configured to: dynamically adjust load quotas of the MVNO among the mobility management network elements by
receiving an overload event sent by a first mobility management network element, wherein the overload event is sent when a difference between a current load quantity of a first MVNO of the first mobility management network element and a load quota that is allocated by the load management module to the first MVNO of the first mobility management network element is less than a set value, and the overload event comprises a load quota that the first mobility management network element requests to be added;
querying for a current load quantity of the first MVNO on another mobility management network element; and
determining a second mobility management network element according to the current load quantity on the another mobility management network element, and schedule a load quota of the second mobility management network element to the first mobility management network element.

## Patentansprüche

1. Lastausgleichsverfahren für ein Szenario, in welchem ein virtueller Mobilnetzwerkbetreiber, MVNO, und ein Mobilnetzwerkbetreiber, MNO, sich Mobilitätsverwaltungsnetzwerkelemente teilen, umfassend:
Erfassen (11) eines Laststatus eines virtuellen Mobilnetzwerkbetreibers, MVNO, der Mobilitätsverwaltungsnetzwerkelemente teilt, durch eine erste Vorrichtung; und
Durchführen (12) von Lastausgleich unter Mobilitätsverwaltungsnetzwerkelementen gemäß dem Laststatus des MVNOs durch die erste Vorrichtung,
wobei:
die erste Vorrichtung ein Lastverwaltungsmodul ist;
das Erfassen eines Laststatus eines MVNOs, der Mobilitätsverwaltungsnetzwerkelemente teilt, durch eine erste Vorrichtung umfasst:
Konfigurieren eines Lastanteils des MVNOs für jedes Mobilitätsverwaltungsnetzwerkelement in einem Mobilitätsverwaltungsnetzwerkelementpool durch das Lastverwaltungsmodul, wobei eine Summe von Lastanteilen jedes MVNOs an allen Mobilitätsverwaltungsnetzwerkelementen eine Gesamtmenge von Ressourcen ist, die durch das Lastverwaltungsmodul einem entsprechenden MVNO zugewiesen werden können; und
das Durchführen von Lastausgleich unter Mobilitätsverwaltungsnetzwerkelementen gemäß dem Laststatus des MVNOs durch die erste Vorrichtung umfasst:
dynamisches Anpassen von Lastanteilen des MVNOs unter den Mobilitätsverwaltungsnetzwerkelementen durch das Lastverwaltungsmodul, umfassend:
Empfangen eines Überlastereignisses, das von einem ersten Mobilitätsverwaltungsnetzwerkelement gesendet wird, durch das Lastverwaltungsmodul, wobei das Überlastereignis gesendet wird, wenn eine Differenz zwischen einer aktuellen Lastmenge eines ersten MVNOs des ersten Mobilitätsverwaltungsnetzwerkelements und einem Lastanteil, der durch das Lastverwaltungsmodul dem ersten MVNO des ersten Mobilitätsverwaltungsnetzwerkelements zugewiesen wird, geringer als ein Sollwert ist, und das Überlastereignis einen Lastanteil umfasst, dessen Hinzufügung das erste Mobilitätsverwaltungsnetzwerkelement anfordert;
Abfragen einer aktuellen Lastmenge des ersten MVNOs an einem anderen Mobilitätsverwaltungsnetzwerkelement durch das Lastverwaltungsmodul; und
Bestimmen durch das Lastverwaltungsmodul eines zweiten Mobilitätsverwaltungsnetzwerkelements gemäß der aktuellen Lastmenge am anderen Mobilitätsverwaltungsnetzwerkelement und Disponieren eines Lastanteils des zweiten Mobilitätsverwaltungsnetzwerkelements für das erste Mobilitätsverwaltungsnetzwerkelement.

2. Lastausgleichsvorrichtung (80) für ein Szenario, in welchem ein virtueller Mobilnetzwerkbetreiber, MVNO, und ein Mobilnetzwerkbetreiber, MNO, sich Mobilitätsverwaltungsnetzwerkelemente teilen, umfassend:
ein Erfassungsmodul (81), das so konfiguriert ist, dass es einen Laststatus eines virtuellen Mobilnetzwerkbetreibers, MVNO, erfasst, der Mobilitätsverwaltungsnetzwerkelemente teilt; und
ein Ausgleichsmodul (82), das so konfiguriert ist, dass es Lastausgleich unter den Mobilitätsverwaltungsnetzwerkelementen gemäß dem vom Erfassungsmodul (81) erfassten Laststatus des MVNOs durchführt,
wobei:
die Vorrichtung ein Lastverwaltungsmodul ist;
das Erfassungsmodul insbesondere konfiguriert ist zum: Konfigurieren eines Lastanteils des MVNOs für jedes Mobilitätsverwaltungsnetzwerkelement in einem Mobilitätsverwaltungsnetzwerkelementpool, wobei eine Summe von Lastanteilen jedes MVNOs an allen Mobilitätsverwaltungsnetzwerkelementen eine Gesamtmenge von Ressourcen ist, die durch das Lastverwaltungsmodul einem entsprechenden MVNO zugewiesen werden können; und
das Ausgleichsmodul insbesondere konfiguriert ist zum: dynamischen Anpassen von Lastanteilen des MVNOs unter den Mobilitätsverwaltungsnetzwerkelementen durch: Empfangen eines Überlastereignisses, das von einem ersten Mobilitätsverwaltungsnetzwerkelement gesendet wird, wobei das Überlastereignis gesendet wird, wenn eine Differenz zwischen einer aktuellen Lastmenge eines ersten MVNOs des ersten Mobilitätsverwaltungsnetzwerkelements und einem Lastanteil, der durch das Lastverwaltungsmodul dem ersten MVNO des ersten Mobilitätsverwaltungsnetzwerkelements zugewicsen wird, geringer als ein Sollwert ist, und das Überlastereignis einen Lastanteil umfasst, dessen Hinzufügung das erste Mobilitätsverwaltungsnetzwerkelement anfordert;
Abfragen einer aktuellen Lastmenge des ersten MVNOs an einem anderen Mobilitätsverwaltungsnetzwerkelement; und
Bestimmen eines zweiten Mobilitätsverwaltungsnetzwerkelements gemäß der aktuellen Lastmenge am anderen Mobilitätsverwaltungsnetzwerkelement und Disponieren eines Lastanteils des zweiten Mobilitätsverwaltungsnetzwerkelements für das erste Mobilitätsverwaltungsnetzwerkelement.

## Revendications

1. Procédé de répartition de charge pour un scénario où un opérateur de réseau mobile virtuel, dit MVNO, et un opérateur de réseau mobile, dit MNO, partagent des éléments de réseau de gestion de la mobilité, le procédé comprenant les étapes suivantes :
acquisition (11), par un premier dispositif, d'un état de charge d'un opérateur de réseau mobile virtuel, dit MVNO, qui partage des éléments de réseau de gestion de la mobilité ; et
réalisation (12), par le premier dispositif, d'une réparation de charge entre les éléments de réseau de gestion de la mobilité en fonction de l'état de charge du MVNO,
dans lequel :
le premier dispositif est un module de gestion de charge ;
l'étape d'acquisition, par un premier dispositif, d'un état de charge d'un MVNO qui partage des éléments de réseau de gestion de la mobilité comprend les étapes suivantes :
configuration, par le module de gestion de charge, d'un quota de charge du MVNO pour chaque élément de réseau de gestion de la mobilité dans une réserve d'éléments de réseau de gestion de la mobilité, une somme de quotas de charge de chaque MVNO sur tous les éléments de réseau de gestion de la mobilité constituant une quantité totale de ressources susceptibles d'être allouées par le module de gestion de charge à un MVNO correspondant ; et
l'étape de réalisation, par le premier dispositif, d'une répartition de charge entre les éléments de réseau de gestion de la mobilité en fonction de l'état de charge du MVNO comprend l'étape suivante :
ajustement dynamique, par le module de gestion de charge, de quotas de charge du MVNO entre les éléments de réseau de gestion de la mobilité, comprenant les étapes suivantes :
réception, par le module de gestion de charge, d'un événement de surcharge envoyé par un premier élément de réseau de gestion de la mobilité, l'événement de surcharge étant envoyé lorsqu'une différence entre une quantité de charge actuelle d'un premier MVNO du premier élément de réseau de gestion de la mobilité et un quota de charge alloué par le module de gestion de charge au premier MVNO du premier élément de réseau de gestion de la mobilité est inférieure à une valeur définie, et l'événement de surcharge comprenant un quota de charge que le premier élément de réseau de gestion de la mobilité demande d'ajouter ;
requête, par le module de gestion de charge, d'une quantité de charge actuelle du premier MVNO sur un autre élément de réseau de gestion de la mobilité ; et
détermination, par le module de gestion de charge, d'un deuxième élément de réseau de gestion de la mobilité en fonction de la quantité de charge actuelle sur l'autre élément de réseau de gestion de la mobilité, et ordonnancement d'un quota de charge du deuxième élément de réseau de gestion de la mobilité pour le premier élément de réseau de gestion de la mobilité.

2. Dispositif de répartition de charge (80) pour un scénario où un opérateur de réseau mobile virtuel, dit MVNO, et un opérateur de réseau mobile, dit MNO, partagent des éléments de réseau de gestion de la mobilité, le dispositif comprenant :
un module d'acquisition (81), configuré pour acquérir un état de charge d'un opérateur de réseau mobile virtuel, dit MVNO, qui partage des éléments de réseau de gestion de la mobilité ; et
un module de répartition (82), configuré pour réaliser une réparation de charge entre les éléments de réseau de gestion de la mobilité en fonction de l'état de charge du MVNO acquis par le module d'acquisition (81),
dans lequel :
le dispositif est un module de gestion de charge ;
le module d'acquisition est plus particulièrement configuré pour : configurer un quota de charge du MVNO pour chaque élément de réseau de gestion de la mobilité dans une réserve d'éléments de réseau de gestion de la mobilité, une somme de quotas de charge de chaque MVNO sur tous les éléments de réseau de gestion de la mobilité constituant une quantité totale de ressources susceptibles d'être allouées par le module de gestion de charge à un MVNO correspondant ; et
le module de répartition est plus particulièrement configuré pour : ajuster dynamiquement des quotas de charge du MVNO entre les éléments de réseau de gestion de la mobilité en
recevant un événement de surcharge envoyé par un premier élément de réseau de gestion de la mobilité, l'événement de surcharge étant envoyé lorsqu'une différence entre une quantité de charge actuelle d'un premier MVNO du premier élément de réseau de gestion de la mobilité et un quota de charge alloué par le module de gestion de charge au premier MVNO du premier élément de réseau de gestion de la mobilité est inférieure à une valeur définie, et l'événement de surcharge comprenant un quota de charge que le premier élément de réseau de gestion de la mobilité demande d'ajouter ;
effectuant une requête d'une quantité de charge actuelle du premier MVNO sur un autre élément de réseau de gestion de la mobilité ; et
déterminant un deuxième élément de réseau de gestion de la mobilité en fonction de la quantité de charge actuelle sur l'autre élément de réseau de gestion de la mobilité, et ordonnançant un quota de charge du deuxième élément de réseau de gestion de la mobilité pour le premier élément de réseau de gestion de la mobilité.
